# EUROPEAN PATENT APPLICATION

(11) **EP 2 903 208 A1**
(43) Date of publication of application: **05.08.2015**
(21) Application number: 13790962.8
(22) Date of filing: 04.07.2013
(51) Int. Cl.: H04L 12/24, H04L 12/26, H04L 12/70

(54) **OAM METHOD AND DEVICE BASED ON MULTI-PROTOCOL LABEL SWITCHING**

(30) Priority: 28.09.2012 CN 201210370643
(71) Applicant: ZTE Corporation, Shenzhen, Guangdong 518057 (CN)
(72) Inventor: WEN, Jianzhong, Shenzhen Guangdong 518057 (CN)
(74) Representative: Brevalex
(86) International application number: PCT/CN2013/078838
(87) International publication number: WO 2013/170813

(57) **Abstract**

An OAM method based on MPLS is described, and the method includes that: after starting and executing a selected IP OAM function, a PE in a L2VPN forms an IP OAM message by using a source IP address, a target IP address and the selected OAM function and sends the IP OAM message to a PE at a receiving end; after receiving the IP OAM message and determining that the IP OAM message needs processing by itself, the PE at the receiving end performs a processing according to contents corresponding to the OAM function in the IP OAM message. An OAM device based on MPLS is also described. By using the OAM method and device, end-to-end OAM can be completed at a time to monitor services conveniently and rapidly.

## Description

### TECHNICAL FIELD

The disclosure relates to a Layer 2 Virtual Private Network (L2VPN) and Layer 3 Virtual Private Network (L3VPN) hybrid network technology in the Multi-protocol Label Switching (MPLS)/MPLS-Transport Profile (MPLS-TP) field, in particularly to an Operation Administration and Maintenance (OAM) method and device based on MPLS.

### BACKGROUND

In a hierarchical network structure, a network is divided into an access layer, a convergence layer and a core layer. The convergence layer or access layer is deployed as an L2VPN while the core layer is deployed as an L3VPN.

As a network architecture based on MPLS/MPLS-Transport Profile (MPLS-TP), the L2VPN is not provided with the OAM function of Internet Protocol (IP) services. Thus, in an L2VPN and L3VPN hybrid network, the OAM function of IP services can only be deployed in segments, specifically, Ethernet OAM and an OAM mechanism for an MPLS/MPLS-TP tunnel layer are employed in the L2VPN, and OAM for an IP layer and an OAM mechanism for an MPLS/MPLS-TP tunnel layer are employed in the L3VPN. However, this deployment mode leads to complicated OAM management, making it impossible to rapidly position a fault at a boundary point of the L2VPN and the L3VPN; in addition, the position result is not accurate enough.

It is thus clear that end-to-end OAM is unachievable in the related L2VPN and V3VPN hybrid network, and consequentially, services cannot be monitored conveniently and rapidly.

### SUMMARY

In view of this, the disclosure is mainly intended to provide an OAM method and device based on MPLS, which are capable of completing end-to-end OAM at a time so as to realize service monitoring conveniently and rapidly.

To this end, the technical solutions of the disclosure are implemented as follows:
An Operation Administration and Maintenance (OAM) method based on Multi-Protocol Label Switching (MPLS) is provided, and the method includes that:
   after starting and executing a selected Internet Protocol (IP) OAM function, forming, by a Provider Edge (PE) in a Layer 2 Virtual Private Network (L2VPN), an IP OAM message by using a source IP address, a target IP address and the selected OAM function, and sending the IP OAM message to a PE at a receiving end; and
   after receiving the IP OAM message and determining that the IP OAM message needs processing by itself, performing, by the PE at the receiving end, a processing according to contents corresponding to the OAM function in the IP OAM message.

In the above solution, the IP OAM message may include: a type identifier, the source IP address, the target IP address, a Time To Live (TTL) and the contents corresponding to the OAM function.

In the above solution, the method may further include: before the IP OAM message is received by the PE, extracting a type identifier from the message in the PE when the PE receives the message, and judging whether or not the message is an IP OAM message according to the type identifier.

In the above solution, the determining that the IP OAM message needs processing by itself may include: extracting the source IP address and the target IP address in the IP OAM message, determining whether or not the source IP address and the target IP address are matched with the IP OAM configuration information stored by itself; if yes, determining that the IP OAM message needs processing by itself, otherwise, determining that the IP OAM message is a message to be forwarded.

An Operation Administration and Maintenance (OAM) device based on Multi-Protocol Label Switching (MPLS) is also provided, and the device includes: a control module, a sending module, a receiving module and an IP-OAM processing module, wherein
the control module is configured, after an Internet Protocol (IP) OAM function is selected, to inform the IP-OAM processing module of starting to execute the selected IP OAM function, and to inform the receiving module of starting to receive a message;
the sending module is configured to send an IP OAM message sent from the IP-OAM processing module to a PE at a receiving end;
the IP-OAM processing module is configured to start and execute the selected IP OAM function according to the informing of the control module, to form an IP OAM message by using a source IP address, a target IP address and the selected IP OAM function, to send the IP OAM message to the sending module, to receive an IP OAM message sent from the receiving module, and to process contents corresponding to an OAM function in the IP OAM message; and
the receiving module is configured to receive the informing of starting to receive a message from the control module, after determining that an IP OAM message is received and the IP OAM message needs processing by itself, to send the IP OAM message to the IP-OAM processing module.

In the above solution, the IP-OAM processing module may be configured to compile a type identifier, the source IP address, the target IP address, a Time To Live (TTL) and the contents corresponding to the OAM function into the IP OAM message.

In the above solution, the receiving module may be configured, when the message is received by the PE, to extract a type identifier from the message in the PE, and to judge whether or not the message is an IP OAM message according to the type identifier.

In the above solution, the receiving module may be configured to extract the source IP address and the target IP address in the IP OAM message, to determine whether or not the source IP address and the target IP address are matched with IP OAM configuration information stored by itself; if yes, to determine that the IP OAM message needs processing by itself, otherwise, to determine that the IP OAM message is a message to be forwarded.

The OAM method and device based on MPLS provided herein are capable of forming an IP OAM message by using a source IP address, a target IP address and a selected OAM function when a PE in an L2VPN executes an OAM detection function and sending the IP OAM message to a PE at a receiving end, and the PE at the receiving end performs a processing according to contents corresponding to the IP OAM function in the IP OAM message received. In this way, a PE in an L3VPN can read the IP OAM message sent from the L2VPN and performs a processing according to the IP OAM message, and the PE in the L2VPN can read the IP OAM message and performs a processing according to the IP OAM message, thereby realizing end-to-end OAM at a time and consequentially monitoring services conveniently and rapidly.

### BRIEF DESCRIPTION OF THE DRAWINGS

Fig. 1 is a flowchart schematically illustrating an OAM method based on MPLS according to the disclosure;
Fig. 2 is a schematic diagram illustrating the network architecture in embodiments 1 and 2 of the disclosure; and
Fig. 3 is a schematic diagram illustrating the structure of an OAM device based on MPLS according to the disclosure.

### DETAILED DESCRIPTION

The basic idea of the disclosure is as follows: after starting and executing a selected Internet Protocol (IP) Operation Administration and Maintenance (OAM) function, a Provider Edge (PE) in a Layer 2 Virtual Private Network (L2VPN) forms an IP OAM message by using a source IP address, a target IP address and the selected OAM function and sends the IP OAM message to a PE at a receiving end; after receiving the IP OAM message and determining that the IP OAM message needs processing by itself, the PE performs a processing according to contents corresponding to the OAM function in the IP OAM message.

The disclosure is described below in detail with reference to the drawings in conjunction with specific embodiments.

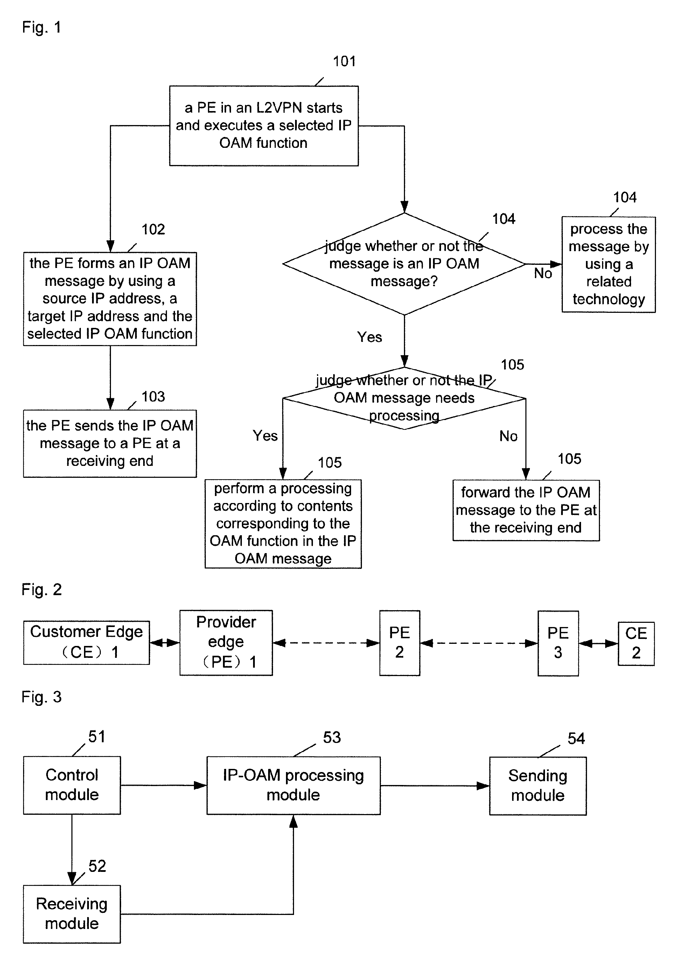

As shown in Fig. 1, an OAM method based on MPLS provided herein includes the following steps:
Step 101: a PE in an L2VPN starts and executes a selected IP OAM function and then step 102 while step 104 is executed;
here, the starting and executing the selected IP OAM function includes: performing a processing according to the function of the selected IP OAM while selecting a PE at a receiving end; taking an IP address of a CE connected with itself as a source address, and taking an IP address of a CE connected with the PE at the receiving end as a target IP address; storing the selected IP OAM function, the source IP address and the target IP address as IP OAM configuration information; and sending the IP OAM configuration information to the PE at the receiving end for storage;
the IP OAM function is a function regulated in the related art and is therefore not described here repeatedly;
Step 102: the PE forms an IP OAM message by using the source IP address, the target IP address and the selected IP OAM function;
here, the IP OAM message includes: a type identifier, the source IP address, the target IP address, a Time To Live (TTL) and contents corresponding to the IP OAM function, wherein the source IP address and the target IP address are both acquired from the IP OAM configuration information;
the type identifier may be a designated IP protocol number 137, that is, MPLS-in-IP, and/or an MPLS label is set as the label of an IP OAM message;
the TTL is the number of router nodes by which the PE is separated from the PE at the receiving end determined by the selected OAM function, for example, when the selected OAM function is LB or LT, then the PE at the receiving end is a PE between the L2VPN and a Layer 3 Virtual Private Network (L3VPN), and the number of the router nodes between the PE and the PE at the receiving end is set as contents of the TTL;
the contents corresponding to the IP OAM function is a content compiled by using a related technology and is therefore not described here repeatedly;
Step 103: the PE sends the IP OAM message to the PE at the receiving end, and then the processing flow is ended;
here, the sending can be realized by using a related technology and is not described here repeatedly; and the PE at the receiving end is determined by using a related technology and is not described here repeatedly;
Step 104: after receiving the message, the PE determines whether or not the message is an IP OAM message; if yes, then step 105 is executed; otherwise, the message is processed according to a related technology, and the processing flow is ended;
specifically, the PE determines whether or not a message is received in real time;
if yes, the PE determines whether or not the message is an IP OAM message,
   if yes, step 105 is executed, otherwise, the message is processed according to a related technology;
otherwise, the PE continues to determine whether or not a message is received;
here, the step that the PE determines whether or not the message is an IP OAM message includes that: after receiving any one message, the PE extracts a type identifier in the message, and determines whether or not the message is an IP OAM message according to the type identifier; for example, the step may includes that: the PE extracts a type identifier in the message, and determines whether or not the type identifier is a designated IP protocol number; if yes, the PE determines that the message is an IP OAM message, otherwise, it determines that the message is not an IP OAM message;
the processing the message by using a related technology refers to processing the message according to related standards of the Internet Engineering Task Force (IETF)/ITU Telecommunication Standardization Sector (ITU-T), and this processing is not described here repeatedly; and
Step 105: the PE determines whether or not the IP OAM message needs processing by itself; if yes, the PE performs a processing according to contents corresponding to the OAM function in the IP OAM message, otherwise, it forwards the IP OAM message to the PE at the receiving end;
here, the step that the PE determines whether or not the IP OAM message needs processing by itself includes that: the PE extracts the source IP address and the target IP address in the IP OAM message, determines whether or not both the source IP address and the target IP address are matched with the IP OAM configuration information stored by itself; if yes, the IP OAM message needs processing by itself, otherwise, the IP OAM message is a message to be forwarded.

The processing performed according to the contents corresponding to the OAM function in the IP OAM message can be realized by using a related technology and is therefore not described here repeatedly.

After forwarding the IP OAM message to the PE at the receiving end, the method further includes that: the PE at the receiving end performs a processing by using a related technology according to the contents corresponding to the OAM function in the message, this process is not described here repeatedly.

### Embodiment 1

In the network architecture shown in Fig. 2, an L2VPN is established between a PE1 and a PE2, and an L3VPN is established between the PE2 and a PE3, and when the PE1 in the L2VPN starts a selected IP OAM function, the method specifically includes that:
Step 201: a PE1 forms an IP OAM message according to a configured source IP address, a configured target IP address and a selected IP OAM function;
Step 202: the PE1 sends the IP OAM message to a PE2 via a router node in an L2VPN;
Step 203: after receiving the message and determining that the message received is an IP OAM message, the PE2 determines whether or not the IP OAM message needs processing by itself; if yes, the PE2 performs a processing according to contents corresponding to the OAM function in the IP OAM message and ends the processing flow, otherwise, the PE2 forwards the IP OAM message to a PE3, and then step 204 is executed; and
Step 204: after determining that the IP OAM message needs processing by itself, the PE3 performs a processing by using a related technology according to the contents corresponding to the OAM function in the massage.

### Embodiment 2

In the network architecture shown in Fig. 2, an L2VPN is established between a PE1 and a PE2, and an L3VPN is established between the PE2 and a PE3, and when the PE3 in the L3VPN initiatively starts OAM detection, the method specifically includes that:
Step 301: a PE3 forms an IP OAM message by using a related technology according to an IP address of a CE2, an IP address of a CE1 and a selected IP OAM function;
Step 302: the PE3 sends the IP OAM message to a PE2 via a router node in an L3VPN;
Step 303: after receiving the message and determining that the message received is an IP OAM message, the PE2 determines whether or not the IP OAM message needs processing by itself; if yes, the PE2 performs a processing according to contents corresponding to the OAM function in the IP OAM message and ends the processing flow, otherwise, the PE2 forwards the IP OAM message to a PE1, and then step 304 is executed; and
Step 304: after receiving the IP OAM message, the PE1 performs a processing according to the OAM function in the IP OAM massage.

### Embodiment 3

In a Long Term Evolution (LTE) project, two kinds of interface services are included, that is, an S1 interface service and an X2 interface service; the S1 interface transmits services between an evolved Node B (eNodeB) and a serving Gateway (sGW), and the X2 interface transmits services between eNodeBs; assuming that an L2VPN is employed between an eNodeB and a PE2, and an L3VPN is employed between the PE2 and an sGW, when a PE11 initiates OAM detection delayed by the S1 interface, the method specifically includes that:
Step 401: a PE11 executes a time delay function and forms an IP OAM message by using a source IP address, that is, an IP address of an eNodeB1, a target IP address, that is, an IP address of an sGW, and a message sending timestamp compiled according to the time delay function;
Step 402: the PE11 sends the IP OAM message to a PE2 via a router node in an L2VPN;
Step 403: after receiving the message and determining that the message received is an IP OAM message, the PE2 determines whether or not the IP OAM message needs processing by itself; if yes, the PE2 performs a processing according to contents corresponding to the OAM function in the IP OAM message and ends the processing flow, otherwise, the PE2 forwards the IP OAM message to a PE3 according to the target IP address in the IP OAM message, and step 404 is executed; and
Step 404: after receiving the IP OAM message, the PE3 calculates a transmission delay of the message according to the message sending timestamp in the IP OAM message and the current time recorded by itself.

As shown in Fig. 3, the OAM device based on MPLS provided herein includes: a control module 51, a receiving module 52, an IP-OAM processing module 53 and a sending module 54, wherein
the control module 51 is configured, after an IP OAM function is selected, to inform the IP-OAM module 53 of starting to execute the selected IP OAM function, and to inform the receiving module 52 of starting to receive a message;
the IP-OAM processing module 53 is configured to start and execute the selected IP OAM function according to the informing of the control module 51, to form an IP OAM message by using a source IP address, a target IP address and the selected IP OAM function, to send the IP OAM message to the sending module 54, and to process contents corresponding to the OAM function in the IP OAM message after receiving the IP OAM message sent from the receiving module 52,;
the receiving module 52 is configured to receive the informing of starting to receive a message from the control module 51, and to send the IP OAM message to the IP-OAM processing module 53 after receiving the IP OAM message and determining that the IP OAM message needs processing by itself; and
the sending module 54 is configured to send the IP OAM message sent from the IP-OAM processing module 53 to a PE at a receiving end.

The IP-OAM processing module 53 is configured, after starting and executing a selected IP OAM function, to select a PE at a receiving end, to store a resource IP address referring to an IP address of a CE connected with itself, a target address referring to an IP address of a CE connected with the PE at the receiving end, and the selected IP OAM function as IP OAM configuration information, and to send the IP OAM configuration information to the sending module 54; and accordingly, the sending module 54 is configured to send the IP OAM configuration information to the PE at the receiving end.

The receiving module 52 is configured to receive and store the IP OAM configuration information sent from the PE at an opposite end.

The IP-OAM processing module 53 is configured to form an IP OAM message by using a type identifier, the source IP address, the target IP address, a TTL and the contents corresponding to the OAM function.

The IP-OAM processing module 53 is configured to determine a PE at a receiving end according to the selected IP OAM function, to determine the number router nodes by which the PE at the receiving end is separated from the IP-OAM processing module 53, and to take the number as contents of the TTL; for example, when the selected OAM function is LB or LT, then the PE at the receiving end is a PE between an L2VPN and an L3VPN, and the number of router nodes between the IP-OAM processing module and a PE at a receiving end is set as contents of the TTL.

The receiving module 52 is configured to determine whether or not a message is received in real time; if yes, to determine whether or not the message is an IP OAM message, otherwise, to continue to determine whether or not a message is received.

The receiving module 52 is configured, after receiving a message, to extract a type identifier from the message, and to determine whether or not the message is an IP OAM message according to the type identifier; for example, the receiving module 52 extracts the type identifier in the message, and determines whether or not the type identifier is a designated IP protocol number or UDP port number; if yes, it determines that the message is an IP OAM message, otherwise, it determines that the message is not an IP OAM message.

The receiving module 52 is configured to determine whether or not the IP OAM message needs processing by itself; if yes, to send the IP OAM message to the IP-OAM processing module 53, otherwise, to forward the IP OAM message to the PE at the receiving end.

The receiving module 52 is configured to extract the source IP address and the target IP address in the IP OAM message, to determine whether or not the source IP address and the target IP address are matched with the IP OAM configuration information stored by itself, if yes, to process the IP OAM message by itself, otherwise, to determine that the IP OAM message is a message to be forwarded.

The above device may be installed in a PE in an L2VPN as a logic module.

The mentioned above is only preferred embodiments of the disclosure but not to be construed as limiting the disclosure.

## Claims

1. An Operation Administration and Maintenance (OAM) method based on Multi-Protocol Label Switching (MPLS), comprising:
after starting and executing a selected Internet Protocol (IP) OAM function, forming, by a Provider Edge (PE) in a Layer 2 Virtual Private Network (L2VPN), an IP OAM message by using a source IP address, a target IP address and the selected OAM function, and sending the IP OAM message to a PE at a receiving end; and
after receiving the IP OAM message and determining that the IP OAM message needs processing by itself, performing, by the PE at the receiving end, a processing according to contents corresponding to the OAM function in the IP OAM message.

2. The method according to claim 1, wherein the IP OAM message includes: a type identifier, the source IP address, the target IP address, a Time To Live (TTL) and the contents corresponding to the OAM function.

3. The method according to claim 1, further comprising: before the IP OAM message is received by the PE, extracting a type identifier from the message in the PE when the PE receives the message, and judging whether or not the message is an IP OAM message according to the type identifier.

4. The method according to claim 1, wherein the determining that the IP OAM message needs processing by itself comprises: extracting the source IP address and the target IP address in the IP OAM message, determining whether or not the source IP address and the target IP address are matched with the IP OAM configuration information stored by itself; if yes, determining that the IP OAM message needs processing by itself, otherwise, determining that the IP OAM message is a message to be forwarded.

5. An Operation Administration and Maintenance (OAM) device based on Multi-Protocol Label Switching (MPLS), comprising: a control module, a sending module, a receiving module and an IP-OAM processing module, wherein
the control module is configured, after an Internet Protocol (IP) OAM function is selected, to inform the IP-OAM processing module of starting to execute the selected IP OAM function, and to inform the receiving module of starting to receive a message;
the sending module is configured to send an IP OAM message sent from the IP-OAM processing module to a PE at a receiving end;
the IP-OAM processing module is configured to start and execute the selected IP OAM function according to the informing of the control module, to form an IP OAM message by using a source IP address, a target IP address and the selected IP OAM function, to send the IP OAM message to the sending module, to receive an IP OAM message sent from the receiving module, and to process contents corresponding to an OAM function in the IP OAM message; and
the receiving module is configured to receive the informing of starting to receive a message from the control module, after determining that an IP OAM message is received and the IP OAM message needs processing by itself, to send the IP OAM message to the IP-OAM processing module.

6. The device according to claim 5, wherein the IP-OAM processing module is configured to compile a type identifier, the source IP address, the target IP address, a Time To Live (TTL) and the contents corresponding to the OAM function into the IP OAM message.

7. The device according to claim 5, wherein the receiving module is configured, when the message is received by the PE, to extract a type identifier from the message in the PE, and to judge whether or not the message is an IP OAM message according to the type identifier.

8. The device according to claim 5, wherein the receiving module is configured to extract the source IP address and the target IP address in the IP OAM message, to determine whether or not the source IP address and the target IP address are matched with IP OAM configuration information stored by itself; if yes, to determine that the IP OAM message needs processing by itself, otherwise, to determine that the IP OAM message is a message to be forwarded.
